Europäisches Patentamt

European Patent Office

Office européen des brevets

(19)

(11) Numéro de publication: **0 004 828**

**A1**

(12) **DEMANDE DE BREVET EUROPEEN**

(21) Numéro de dépôt: 79810029.3

(22) Date de dépôt: 28.03.79

(51) Int. Cl.²: **G 03 B 17/53**
G 03 B 17/24, G 03 B 27/32

(30) Priorité: 30.03.78 CH 3380/78

(43) Date de publication de la demande:
17.10.79 Bulletin 79/21

(84) Etats Contractants Désignés:
BE DE FR GB IT LU NL SE

(71) Demandeur: JAHLEEL Corporation
Via Espana 200
Panama 5(PA)

(84) Etats Contractants Désignés:
DE FR GB IT LU NL SE

(71) Demandeur: Wahl, Philippe
6, rue Pédro-Meylan
CH-1207 Geneve(CH)

(84) Etats Contractants Désignés:
BE

(72) Inventeur: Luscher, Fred
82, Quai du Cheval-Blanc
CH-1227 Geneve(CH)

(74) Mandataire: Charbonnier, Georges R.
8, Avenue Peschier
CH-1206 Geneve(CH)

(54) Appareil reprographique multifonction.

(57) L'appareil reprographique multifonction selon l'invention permet d'effectuer au choix de l'utilisateur, soit des photocopies, soit des photographies, instantanées ou non, de formats divers, en noir et blanc ou en couleurs, ainsi que divers types de cartes d'identification.

Il comprend, logés dans un meuble (10) présentant une fenêtre et une fenêtre (12), un système optique (14) disposé à l'entrée d'une chambre noire (15), un rouleau de papier photosensible (17) guidé et entrainé par des galets (18), un dispositif d'illumination, et un groupe de développement (20). Un levier sélecteur (24) permet de modifier les positions de divers éléments du système optique (14) notamment d'escamoter le miroir (23), de manière à pouvoir faire des photocopies de sujets à deux dimensions placés dans le plan de la fenêtre ou des photographies de sujets à deux ou trois dimensions situés en avant de la fenêtre (12).

Fig.2

EP 0 004 828 A1

APPAREIL REPROGRAPHIQUE MULTIFONCTION

On connait des appareils à photocopier qui permettent, à partir d'un original, d'obtenir une ou plusieurs copies de même format ou de formats différents.

On connait également des appareils photographiques, automatiques ou non, qui permettent, en cabine ou non, d'effectuer à partir d'un sujet, des photographies de formats divers.

L'objet de la présente invention est un appareil reprographique multifonction, instantané ou non, qui permet d'effectuer au choix de l'utilisateur, soit des photocopies, soit des photographies, de formats divers, en noir-blanc ou en couleurs, ainsi que divers types de cartes d'identification.

Le dessin ci-annexé représente schématiquement et à titre d'exemple, une forme d'exécution de l'objet de l'invention.

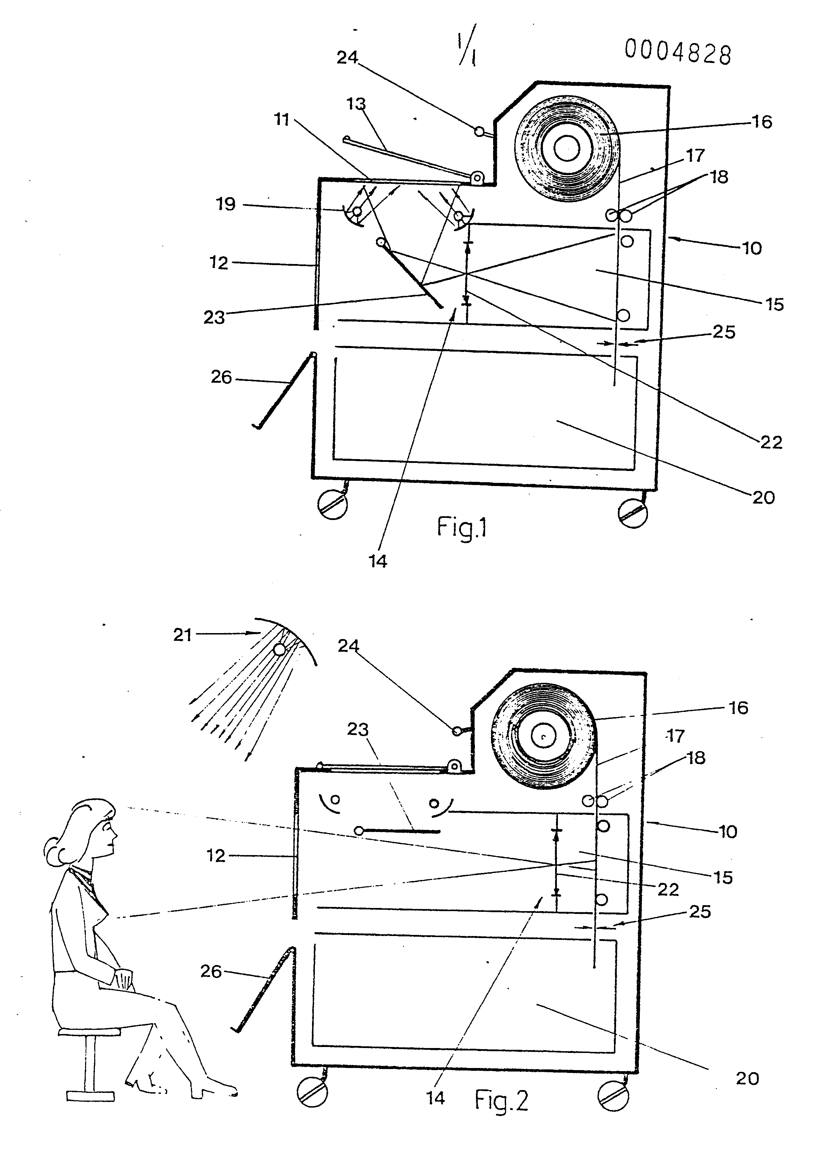

La figure 1 est une vue en coupe verticale illustrant le fonctionnement de l'appareil pour effectuer des photocopies; la figure 2 est une vue analogue illustrant le fonctionnement de l'appareil pour effectuer des photographies.

L'appareil représenté comprend, logés dans un meuble 10 présentant une fenêtre 11 susceptible d'être fermée par un cache 13 et une fenêtre 12 ménagée sur la face frontale du meuble, un système optique 14 disposé à l'entrée d'une chambre noire 15, un rouleau de papier photosensible 17 guidé et entrainé par des galets 18, un dispositif d'illumination 19, et un groupe de développement 20.

../..

- 2 -

0004828

L'appareil comprend éga'ement, situé à l'extérieur du meuble 10, un second dispositif d'illumination 21.

Le système optique 14 se compose d'un objectif 22, dont la position axiale est réglable, et d'un miroir plan 23 articulé autour d'un axe horizontal.

Un levier sélecteur 24 permet de modifier les positions linéaire et angulaire de l'objectif 22 et du miroir 23 et les régler de manière à correspondre à différentes fonctions de l'appareil.

La figure 1 montre schématiquement l'appareil prêt à effectuer des reproductions photographiques d'un sujet à deux dimensions (photocopies) posé dans le plan de la fenêtre 11 sur un verre transparent. Le levier 24 est relevé, l'objectif 22 se trouve à une certaine distance de la surface du papier 17 et le miroir est incliné à $45^{\circ}$. Le système optique 14 est ainsi réglé pour former sur le papier une image du sujet de même format que ce dernier. En appuyant sur un bouton non représenté on met sous tension le dispositif d'illumination 19 qui éclaire le sujet pendant un intervalle de temps déterminé de manière à enregistrer l'image formée      sur la pellicule, puis la bande de papier avance afin qu'une pellicule vierge se mette en place, tandis que la surface impressionnée est coupée par des ciseaux 25  et prise en charge de façon connue par le groupe 20 qui la développe et la met à disposition de l'utlisateur sur un plateau 26.

La figure 2 montre l'appareil prêt à photographier un sujet à trois dimensions, en l'occurence/un personnage assis devant et à une certaine
le portrait d' /
distance de la fenêtre 12. Le levier 24 est abaissé, l'objectif 22 se trouve à proximité de la surface du papier 17 et le miroir 23 est escamoté.

../..

Le système optique est ainsi réglé pour former sur la pellicule déroulée au fond de la chambre noire 15 une image du sujet dans un format
standard, par exemple carte postale ou photo d'identité. En appuyant
sur un bouton non représenté on met sous tension le dispositif d'illumination 21 qui éclaire le sujet pendant un laps de temps déterminé de manière à enregistrer l'image formée sur la pellicule, puis les opérations
décrites précédemment se répètent et l'utilisateur peut finalement prendre
possession de sa photographie dans le plateau 26.

Des positions intermédiaires du levier 24 peuvent être envisagées,
correspondant par exemple à la reproduction de sujets à deux ou trois
dimensions en formats agrandis ou réduits.

Le fonctionnement de l'appareil peut être subordonné à l'introduction
d'une pièce de monnaie, d'un jeton, d'une carte perforée et le nombre
de photos prises peut être enregistré par un compteur.

L'invention n'est évidemment pas limitée à la forme d'exécution représentée au dessin.

En particulier on pourrait prévoir une variante dans laquelle on aurait
supprimé le levier sélecteur 24 et l'aurait remplacé par des boutons
poussoirs ou à touche.

En outre le système optique pourrait comprendre plusieurs objectifs de
manière à permettre les prises simultanées ou successives de plusieurs
photos semblables ou différentes sur un support unique.

Par ailleurs on pourrait prévoir d'autres réglages du système optique
que ceux décrits, par exemple des réglages modifiant la distance focale
de l'objectif et permettre ainsi à l'utilisateur de choisir le format
de la reproduction, ou d'effectuer plusieurs photos d'un même sujet sur un même support en formats différents.

L'appareil pourrait également être doté de groupes de flashes électroniques ou de prises de synchronisation pour des flashes indépendants.

Enfin, on pourrait prévoir deux pellicules, l'une noir-blanc, l'autre couleurs et des moyens permettant à l'utilisateur de choisir l'une ou l'autre aussi bien pour des photocopies que pour des photographies.

L'appareil peut également être réalisé de manière que l'on puisse obtenir moyennant l'introduction d'une fiche d'information, la reprise photographique du sujet ainsi que la photographie partielle ou totale de la fiche d'information sur le même support et ce en un ou plusieurs exemplaires.

Il pourra être actionné par un opérateur ou être complétement automatique et, dans ce cas, être actionné par l'introduction de pièces de monnaie, d'un jeton, d'un billet ou d'un ticket.

Le système de développement pourra comprendre un bain chimique et un support sensible photographique ou un support sensibilisé préalablement à l'exposition ou après l'exposition.

Il pourra encore être agencé de façon à pouvoir transférer l'image d'un support intermédiaire à un autre support électrostatique, diazo, thermique, électronique, ionique ou autre, ou encore utiliser un support direct ou indirect et dont le support final puisse être développé à sec par un procédé électrostatique, thermique, diazo, ionique ou électronique, ou par un produit liquide ou gazeux.

# REVENDICATIONS

1) Appareil reprographique multifonction, caractérisé par le fait qu'il comprend des moyens permettant d'effectuer à choix soit une ou plusieurs photocopies d'un original, soit une ou plusieurs photographies d'un sujet.

2) Appareil selon la revendication 1, caractérisé par le fait que lesdits moyens permettent d'effectuer des photocopies en noir-blanc ou en couleurs dans un format égal ou différent de l'original.

3) Appareil selon la revendication 1, caractérisé par le fait que lesdits moyens permettent d'effectuer des photographies en noir-blancs ou en couleurs simultanément ou en séquence et de grandeurs différentes ou non.

4) Appareil selon la revendication 1, caractérisé par le fait que lesdits moyens permettent d'obtenir plusieurs photographies d'identité de même format ou de formats divers en noir-blanc ou en couleurs avec une ou plusieurs expositions.

5) Appareil selon la revendication 1, caractérisé par le fait que lesdits moyens permettent d'obtenir, moyennant l'introduction d'une fiche d'information, la reprise photographique du sujet ainsi que la photographie partielle ou totale de la fiche d'information sur le même support, et ceci en un ou plusieurs exemplaires.

../..

0004828

6) Appareil selon la revendication 1, caractérisé par le fait que lesdits moyens peuvent être actionnés par un opérateur ou être complétement automatiques et, dans ce cas, être actionnés par l'introduction d'une pièce de monnaie, d'un jeton, d'un billet ou d'un ticket.

7) Appareil selon la revendication 1, caractérisé par le fait que lesdits moyens comprennent un dispositif de développement à bains chimiques et un support sensible photographique.

8) Appareil selon la revendication 1, caractérisé par le fait que lesdits moyens comprennent un support sensibilisé préalablement à l'exposition ou après l'exposition.

9) Appareil selon la revendication 1, caractérisé par le fait que lesdits moyens comprennent un support intermédiaire pour ensuite transférer l'image sur un autre support par un procédé électrostatique, diazo, thermique, électronique, ionique ou autre.

10) Appareil selon la revendication 1, caractérisé par le fait que lesdits moyens comprennent un support direct ou indirect et un support final développable à sec par un procédé électrostatique, thermique, diazo, ionique ou électronique, ou par produits liquides ou gazeux.

Fig.1

Fig.2

0004828

0004828

Office européen
des brevets

**RAPPORT DE RECHERCHE EUROPEENNE**

Numéro de la demande

EP 79 810 029.3

## DOCUMENTS CONSIDERES COMME PERTINENTS

| Catégorie | Citation du document avec indication, en cas de besoin, des parties pertinentes | Revendication concernée |
|---|---|---|
| | US – A – 4 011 570 (AGFA–GEVAERT)<br>* revendication 1; fig. 1, 6 *<br><br>-- | 1,5 |
| | DE – A – 1 522 725 (RENKER–BELIPA)<br>* revendication 1; fig. *<br><br>-- | 1 |
| | DE – A – 2 632 096 (AKZO)<br>* fig. *<br><br>-- | 1 |
| | DE – B – 2 110 146 (EASTMAN KODAK)<br>* fig. 3 à 6 *<br><br>---- | 1 |

**CLASSEMENT DE LA DEMANDE (Int. Cl.²)**

G 03 B  17/53

G 03 B  17/24

G 03 B  27/32

**DOMAINES TECHNIQUES RECHERCHES (Int. Cl.²)**

G 03 B  17/00

G 03 B  19/00

G 03 B  27/00

G 03 G  15/00

**CATEGORIE DES DOCUMENTS CITES**

X: particulièrement pertinent
A: arrière-plan technologique
O: divulgation non–écrite
P: document intercalaire
T: théorie ou principe à la base de l'invention
E: demande faisant interférence
D: document cité dans la demande
L: document cité pour d'autres raisons
&: membre de la même famille, document correspondant

| X | Le présent rapport de recherche a été établi pour toutes les revendications | |
|---|---|---|
| **Lieu de la recherche**<br>Berlin | **Date d'achèvement de la recherche**<br>02–07–1979 | **Examinateur**<br>HOPPE |

OEB Form 1503.1  06.78